# EUROPEAN PATENT APPLICATION

(11) **EP 4 516 875 A1**
(43) Date of publication of application: **05.03.2025**
(21) Application number: 23195235.9
(22) Date of filing: 04.09.2023
(51) Int. Cl.: C09K 11/02, C09K 11/06

(54) **DYE-LOADED ZEOLITE COMPOSITE MATERIALS**

(71) Applicant: Optical Additives GmbH, 5603 Staufen (CH)
(72) Inventor: Kunzmann, Andreas, 5603 Staufen (CH)
(74) Representative: Hepp Wenger Ryffel AG

(57) **Abstract**

The present invention relates to the technical field of optical materials and devices. In particular, the invention relates dye-loaded composite materials. It further relates to zeolite-polymer hybrid materials and luminescent concentrators. It also relates to processes for preparing dye-loaded composite materials and the uses of dye-loaded composite materials, zeolite-polymer hybrid materials and luminescent concentrators.

## Description

The present invention relates to the technical field of optical materials and devices. In particular, the invention relates dye-loaded composite materials. It further relates to zeolite-polymer hybrid materials and luminescent concentrators. It also relates to processes for preparing dye-loaded composite materials and the uses of dye-loaded composite materials, zeolite-polymer hybrid materials and luminescent concentrators.

Zeolites are porous, aluminosilicate minerals commonly used as commercial adsorbents and catalysts. Characterised by a three-dimensional framework of tetrahedrally connected alumina and silica units, zeolites possess a high surface area and well-defined pore structure. These features make zeolites highly effective in selective adsorption and ion-exchange processes.

Dye-loaded zeolite composite materials combine the porous structure of zeolites with the optoelectronic properties of organic dyes. Through methods such as encapsulation or adsorption, dye molecules are integrated into the zeolite framework. This results in improved stability, tuneable photophysical properties, and increased adsorption capacity. These composites have potential applications in various fields, including photovoltaics, sensors, and catalysis.

The patent EP 1873202 B1 (CLARIANT FINANCE, UNIV BERN, OPTICAL ADDITIVES, 29 June 2006) discloses a transparent zeolite-polymer hybrid material with tunable properties. The material comprises dye-loaded zeolite composite materials dispersed in a polymer matrix. This material is noted for its transparency and tunable properties, making it versatile for various applications, such as use in lenses, eyeglasses, polarizers, monitors or window panes.

In EP 3434748 B1 (MERZ BENTELI AG, 26 July 2017), a method for preparing a zeolite L material that hosts (a) guest molecule(s). The inventive aspect of this method lies in the use of cyclic siloxanes as a transport agent for the guest molecules. This allows the guest molecules to be incorporated into the channels of the zeolite L crystals.

Luminescent solar concentrators (LSCs) or luminescent concentrators are optical devices designed to enhance the efficiency of light energy harvesting systems. Comprising a transparent substrate embedded with luminescent materials, LSCs absorb sunlight and re-emit it at longer wavelengths. This re-emitted light is guided to the edges of the substrate, where it is concentrated onto photovoltaic cells for conversion into electrical energy. The ability of LSCs to collect diffuse sunlight makes them particularly useful in low-light conditions, thereby broadening the range of environments in which light energy can be effectively harvested.

In the prior art, LSCs comprising dye-loaded zeolite composite materials are described. Patent EP 2291484 B1 (CALZAFERRI GION, KUNZMANN ANDREAS, UNIV ZUERICH, 31 March 2009) focuses on the integration of luminescent dyes within zeolite structures to create devices that can concentrate or disperse light effectively. Patent EP 2791274 B1 (CALZAFERRI GION, KUNZMANN ANDREAS, UNIV ZUERICH, 10 December 2012) discloses a composite material that combines dye molecules with zeolite structures. The invention focuses on the local J-coupling between dye molecules within the zeolite channels, enhancing the material's luminescent properties.

While encapsulating guest molecules such as dyes in zeolites can improve the stability of guest molecules with respect to photodegradation, thermal degradation, and oxidative and reductive as well as acid and base processes, it has been found that in prior art systems and methods, the long-term stability of guest molecules, especially dye molecules, is not sufficient for many applications.

Especially in applications involving a strong and continuous irradiation of electromagnetic waves, such as the use of these systems as LSCs, it is often found that the dyes decompose under photodegradation despite being encapsulated. Acid-sensitive guest molecules in particular tend to decompose over time.

It is therefore an object of the present invention to overcome at least some, if not all shortcomings of the prior art methods. In particular, it is an object of the present invention to provide dye-loaded zeolite composite materials with an enhanced long-term stability. The long-term stability should be maintained, in particular, against photochemical, thermal, oxidative, reductive as well as acid and base influences, especially against acid influences.

The objective is solved by dye-loaded zeolite composite materials, by zeolite-polymer hybrid materials, by luminescent concentrators, by processes for preparing dye-loaded composite materials and uses of dye-loaded composite materials, zeolite-polymer hybrid materials and luminescent concentrators according to the independent claims. Advantageous embodiments and further developments are the subject of the dependent claims.

A first aspect of the invention pertains to a dye-loaded zeolite composite material. The material comprises a plurality of zeolite crystals comprising pores with a pore size. It also comprises a plurality of dye molecules, in particular luminescent dye molecules, in the pores. The spatial extent of at least two dimensions perpendicular to each other of each dye molecule are smaller than the pore size.

The material is characterized in that the plurality of zeolite crystals comprises at least 5 moles SiO₂ per mole Al₂O₃, preferably at least 10 moles SiO₂ per mole Al₂O₃, more preferably at least 50 moles SiO₂ per mole Al₂O₃, even more preferably at least 100 moles SiO₂ per mole Al₂O₃, even more preferably at least 200 moles SiO₂ per mole Al₂O₃, most preferably at least 400 moles SiO₂ per mole Al₂O₃. Alternatively, the material is characterized in that the zeolite crystals are aluminophosphate zeolite crystals.

Zeolites are aluminosilicate compounds forming a framework consisting of tetrahedrons of silicon cations (Si⁴⁺) and aluminium cations (Al³⁺) that are surrounded by oxygen anions (O²⁻). Oxygen atoms form bonds between Si-O and Al-O tetrahedrons. Different arrangements of these oxygen-sharing tetrahedrons result in different geometric forms of the crystal structure comprising polyhedral pores. Windows are rings formed of tetrahedral units that define the faces of polyhedral pores. Cages are polyhedral pores with narrow windows that do not allow the passage of molecules larger than water. Cavities are polyhedral pores with at least one face defined by a ring large enough to allow the penetration of a guest species larger than water but are not infinitely extended. Channels are pores extended infinitely in one dimension and wide enough to allow the diffusion of guest molecules larger than water along their length. VILLARROEL-ROCHA J. ET AL (Critical Overview of Textural Characterization of Zeolites by Gas Adsorption. Cham: Springer, 2020, Vol. 184) provides a comprehensive definition of the pores in zeolites.

In the context of the present invention, the pore diameter is defined by the free diameter, which is the diameter of the largest sphere that can pass through the pore. The methods for determining pore diameters for different type of pore geometries are described in VILLARROEL-ROCHA J. ET AL (Critical Overview of Textural Characterization of Zeolites by Gas Adsorption. Cham: Springer, 2020, Vol. 184).

All pores that deviate at most 30 %, preferably at most 20 %, most preferably at most 10 % from the nominal pore diameter are considered to belong to the nominal pore diameter.

If a zeolite type comprises more than one pore type with different pore diameters, the pore diameter corresponds to the largest pore diameter of the zeolite type.

The plurality of dye molecules according to the invention can comprise one type of molecule or a composition of different types molecules.

The dye molecules are chosen so that a Förster resonance energy transfer can occur between individual molecules.

Suitable molecules for dye-loaded zeolite composite materials according to the invention have been described in EP 1873202 B1 (CLARIANT FINANCE, UNIV BERN, OPTICAL ADDITIVES, 29 June 2006), EP 2291484 B1 (CALZAFERRI GION, KUNZMANN ANDREAS, UNIV ZUERICH, 31 March 2009) and EP 2791274 B1 (CALZAFERRI GION, KUNZMANN ANDREAS, UNIV ZUERICH, 10 December 2012).

The plurality of dye molecules of the dye-loaded zeolite composite material according to the invention are small enough to fit into the pores of the zeolite crystals. They are adsorbed on the pore surface.

The SiO₂/Al₂O₃ mole ratio in zeolites can be tuned either by selective solid-state synthesis or by post-synthesis modifications of the zeolite framework, e.g. by dealumination using mineral acids like HCl or HNO₃, or dealumination by steam treatment. In the prior art, essentially aluminium-free zeolites are known (WRAGG D. S. et al, Pure Silica Zeolite-type Frameworks: A Structural Analysis. Chem. Mater. 2008, No. 20, pages 1561 to 1570). A SiO₂/Al₂O₃ mole ratio of 10:1, for example, corresponds to a Si/Al mole ratio of 5:1, as there are two Al atoms in Al₂O₃.

Preferably, the zeolite crystals are essentially aluminium-free.

In the context of the present invention, aluminophosphate zeolite crystals are aluminophosphate materials with zeolite-like properties. They also are microporous crystalline materials with similar framework structures as conventional zeolites. Such aluminophosphate materials are disclosed and further described, e.g., in RUNGROJCHAIPON P. et al. (Microporous Mesoporous Mater. 2008, Vol. 109, No. 1-3, pages 478 to 484).

It has surprisingly been found that dye molecules comprised in dye-loaded zeolite composite material according to the invention exhibit a prolonged stability, in particular towards photochemical, thermal, oxidative, reductive as well as acid and base influences. Particularly with zeolites, which have a particularly high SiO₂/Al₂O₃ mole ratio, a particularly good longevity of the dyes as guest molecules was found.

Without being bound to a theory, the increased long-term stability of the incorporated dye molecules is explained as follows. The isomorphic exchange of an Al³⁺ with a Si⁴⁺ brings a positive charge into the zeolite framework and a Brönsted acid site is thereby removed. Thus, the proton that balanced the negative charge excess due to the Al³⁺ is also removed. Therefore, a low proportion of aluminium with respect to silicon in the zeolite crystal leads to an overall lower Brönsted acid concentration.

It is therefore assumed that the high Brönsted acid concentration in zeolite crystals with a lower SiO₂/Al₂O₃ mole ratio favours various decomposition reactions of the dyes. A more pH-neutral environment in zeolites with a higher SiO₂/Al₂O₃ mole ratio therefore leads to fewer such decomposition reactions favoured by Brönsted acids.

In contrast to zeolites, aluminophosphate zeolites lack Brönsted acid sites entirely. With the same reasoning as above, it can therefore be said that aluminophosphate zeolites also lead to fewer decomposition reactions of the dye guest molecules due to the lack of Brönsted acid sites.

This surprisingly high stability of the dye molecules in the dye-loaded zeolite composite materials is particularly advantageous for applications in which the dye molecules are exposed to extreme conditions for a long time. Such applications include LSCs where the dye molecules are exposed to direct sunlight for decades.

In a preferred embodiment of the first aspect of the invention, the type of zeolite crystals is zeolite L, zeolite Y, mordenite, ferrierite, pentasil, BETA, AlPO-5, AlPO-15, AlPO-36 or a combination thereof.

Zeolite L is characterized by its one-dimensional, straight channels. Zeolite Y is a faujasite-type zeolite with a three-dimensional pore system. Mordenite is a zeolite with differently sized channels. Pentasil is a family of zeolites that includes ZSM-5 with a three-dimensional pore structure. The BETA type zeolite also has a three-dimensional pore structure.

AlPO-5 (aluminophosphate-5) is a molecular sieve featuring one-dimensional, non-intersecting channels. AlPO-15 is characterized by its three-dimensional pore structure. AlPO-36 includes large cages connected by 8-ring windows.

It has been found that these types of zeolites and aluminophosphate zeolites lead to a particularly good stability of the incorporated dye molecules.

In another preferred embodiment of the first aspect of the invention, the pore diameter is at least 0.5 nm, preferably at least 0.7 nm, more preferably at least 0.9 nm.

The pore diameter and the acceptable pore size distribution have been defined above.

It has been shown that larger dye molecules are more suitable for applications of dye-loaded zeolite composite materials where the long-term stability of the dye molecules is advantageous.

Additionally, it has been found that the absorption wavelengths of the dye molecules is generally proportional to the molecule's size. For applications where smaller absorption wavelengths are desired, smaller molecules and thus also zeolites with smaller pore diameters are the obvious choice.

In another preferred embodiment of the first aspect of the invention, the dye molecules are chosen from the group consisting of perylene dyes, terylene dyes, cyanine dyes, oxazine dyes, BODIPY dyes, stilbene dyes, xanthene dyes, POPOP, dimethyl POPOP, biphenyls, terphenyls, quaterphenyls, tetracenes, triphendioxazines, acridines, stilbenes, azobenzenes, oxazolyl benzenes, styryl benzenes, fluorenone, isoviolanthrones, thioindigo compounds, and spiropyrans, naphthopyrans, carotenoids, caro-tenes, xanthenophylles, flavines, pyronines, oxazines, thio-nines, resorufine, methylviologen, carbocyanines, zethrene, rhodamine dyes, rhodamine 800, tetramethylrhodamine, BTA-TPA, ESi5a-ESi5d, tb-DXP, Amplite ADHP, Amplite IR, LysoBrite^{™} Red DND-99, Alexa Fluor dyes, KFL-1, KFL-3, KFL-11, KFL-12, KFL-13, TM-BDP, p-terphenyl, fluorescein, thodamine dyes, cyanine, dyes, pyrene dyes, Janelia dyes, SiR-Hoechst dyes, Phiton dyes, hostasol red, Oxonines, PDI dyes, dm-XP, Pigment Red 149, DMP, Pyronine, Resorufin (Res), Hydroxy-TEMPO, Biphenyl, DPH, MBOXE, 6-(((4-(4,4-difluoro-5-(2-thienyl)-4-bora-3a,4a-diaza-s-indacene-3-yl)phenoxy)acetyl)amino)hexanoic acid succinimidyl ester, 4,5-difluoro-5,7-diphenyl-4-bora-3a,4a-diaza-s-indacene-3-propionyl ethylenediamine hydrochloride, Pyronine G, Fluorenone and any combinations thereof.

BTA-TPA has been described in LUO Q. et al. (Deep-red fluorescence from isolated dimers: a highly bright excimer and imaging in vivo. Chem. Sci. 2020, Vol. 11, page 6020).

ESi5a-ESi5d has been described in LI J. et al (Stable, Bright, and Long-Fluorescence-Lifetime Dyes for Deep-Near-Infrared Bi-oimaging. J. Am. Chem. Soc. 2022, Vol. 144, No. 31, pages 14351 to 14362).

Preferably, the xanthene dye(s) is or comprise 2-((6-hydroxy-2,3-dihydro-1H-xanthen-4-yl)methylene)malononitrile.

BODIPY (Boron-dipyrromethene) dyes are a class of fluorescent dyes. The core structure of BODIPY (CAS 138026-71-8) consists of a boron atom coordinated with two dipyrromethene ligands, forming a planar and highly conjugated system.

POPOP (1,4-bis(5-phenyloxazol-2-yl) benzene; CAS 1806-34-4) is an organic scintillator dye.

Dimethyl POPOP is known as 4-methyl-2-[4-(4-methyl-5-phenyl-1,3-oxazol-2-yl)phenyl]-5-phenyl-1,3-oxazole (CAS 3073-87-8, maximum absorption wavelength (cyclohexane): 362 nm; maximum emission wavelength (cyclohexane): 419 nm).
tb-DXP has been described in CAO P. et al. (Supramolecular Organization of Dye Molecules in Zeolite L Channels: Synthesis, Properties, and Composite Materials. Chemistry. 2016, Vol. 22, No. 12, pages 4046 to 4060).

Oxazine 1 is a molecule with the CAS 24796-94-9. Oxazine 1 is a derivative of Oxazine with a maximum absorption wavelength of 648 nm (Zeolite L) and a maximum emission wavelength of 668 nm (Zeolite L) (https://www.aatbio.com/resources/assaywise/2015-4-2/peroxidase-detection)

Amplite ADHP, LysoBrite^{™} Red DND-99 is a molecule according to Formula 1

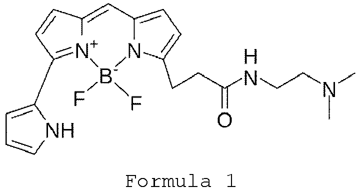

Preferably, the plurality of dye molecules comprises any one of the following compositions:
- dimethyl POPOP, Amplite ADHP and Amplite IR;
- dimethyl POPOP, Amplite ADHP, Amplite IR and BODIPY 576/589;
- dimethyl POPOP, Amplite ADHP, Amplite IR and Alexa Fluor 546;
- KFL-11, KFL-1, and optionally KFL-13;
- KFL-11, KFL-1, TM-BDP, optionally KFL-12, and optionally KFL-13;
- Dimethyl POPOP, KFL-11, KFL-1, KFL-12, KFL-3;
- TPB, and dimethyl POPOP;
- p-terphenyl, dimethyl POPOP, and perylene,
- p-terphenyl, dimethyl POPOP, perylene, BODIPY 500/510, BODIPY TMR, BODIPY 581/591, Bodi Fluor 576/589 NHS Ester, and BODIPY 630/650.

BODIPY 576/589 has the CAS 150173-78-7, BODIPY 500/510 has the CAS 144672-74-2.

KFL-1, KFL-3, KFL-11, KFL-12, KFL-13, and TM-BDP have been described in UMEZAWA K. et al. (Bright, Color-Tunable Fluorescent Dyes in the Vis/NIR Region: Establishment of New "Tailor-Made" Multicolor Fluorophores Based on Borondipyrromethene. Chem. Eur. J. 2009, Vol. 15, No. 5, pages 1096 to 1106).
dm-XP is 2,9-bis(2,6-dimethylphenyl)anthra[2,1,9-def:6,5,10-d'e'f']-diisoquinoline-1,3,8,10(2H,9H)tetraone.

Pigment Red 149 is 2,9-bis(3,5-dime-thylphenyl)anthra[2,1,9-def:6,5,10-'e'f']diisoquinoline-1,3,8,10-(2H,-9H)-tetraone. Hostasol Red is 14H-anthra[2,1,9-mna]thioxanthen-14-one (Hostasol Red.

DMP is 1,4-bis(4-methyl-5-phenyloxazol-2-yl)benzene.

DPH is 1,6-Diphenylhexatriene.

MBOXE is 1,2-bis-<5-methyl-benzoxazol-2-yl>-ethene.

The list of molecules and classes of molecules mentioned includes both the core molecule and derivatives thereof. In the context of the present invention, a derivative of a core molecule is a molecule in which at most 6, preferably at most 4, most preferably at most 2 functional groups and/or hydrogen atoms have each been replaced by a different functional group or a hydrogen atom.

Preferably, dye-loaded zeolite composite materials according to the invention comprise the following zeolite-dye combinations:
- zeolite L and perylene;
- zeolite L and terylene;
- zeolite L and POPOP;
- zeolite L and hostasol red
- ferrierite and p-terphenyl;
- mordenite and POPOP;
- zeolite Y and compounds 1 to 5 in DAI J. et al. (Molecular Conformation Engineering To Achieve Longer and Brighter Deep Red/Near-Infrared Emission in Crystalline State, J. Phys. Chem. lett. 2022, Vol. 13, No. 21, pages 4754 to 4761);
- pentasil and BODIPY;
- pentasil and cyanine dye;
- BETA and zethrene;
- BETA and BODIPY;
- mordenite and hostasol red; or
- any combinations of these zeolite-dye combinations.

In a preferred embodiment of the first aspect of the invention, more than 90 %, preferably more than 95 %, most preferably more than 99 % of the pore openings to the outer surfaces of the zeolite crystals are each occupied by a dye molecule, wherein the dye molecule is partially surrounded by the pore and partially protrudes from the opening, and wherein the dye molecule is linked to the outer surface via a chemical bond, preferably a silane-hydroxyl linkage.

This allows the pore openings to be closed, which prevents the penetration of unwanted molecules (e.g. water, oxygen). This thus leads to particularly stable dye-loaded zeolite composite materials.

A second aspect of the invention pertains to a zeolite-polymer hybrid material. The material comprises a transparent polymer or transparent polymer composition. It also comprises a dye-loaded zeolite composite material of the first aspect of the invention. The dye-loaded zeolite composite material is embedded as one layer, or two layers spaced apart or more than two layers spaced apart into the transparent polymer or transparent polymer composition. The zeolite-polymer hybrid material optionally comprises a varnish and/or coating for application to the transparent polymer or transparent polymer composition or glass.

In the context of the present invention, the terms "transparent polymer" and "transparent polymer composition" refers to a polymeric material that exhibits a light transmittance of at least 90 % within the visible spectrum range of 400 nm to 700 nm, in accordance with ASTM D1003-21 (07 June 2021). The material should also demonstrate a haze value of less than 5 %, in accordance with ASTM D1003-21 (07 June 2021), to ensure minimal light scattering.

The production, suitable polymers, properties and use of the zeolite-polymer hybrid material according to the invention were described in EP 1873202 B1 (CLARIANT FINANCE, UNIV BERN, OPTICAL ADDITIVES, 29 June 2006).

The amount of the zeolite crystals dispersed in the transparent polymer or in the transparent polymer composition is preferably 0.005 %-v/v to 40 %-v/v, e.g. 0.5 %-v/v to 25 %-v/v, relative to the total volume of the hybrid material.

The dye-loaded composite material according to the invention is preferably a dye-loaded composite material layer.

The use of dye-loaded zeolite composite materials according to the first aspect of the invention in zeolite-polymer hybrid materials according to the second aspect of the invention leads to a higher longevity of the incorporated dye molecules.

In a preferred embodiment of the second aspect of the invention, the transparent polymer or transparent polymer composition comprises of polyolefines, polysiloxanes, polyacrylates, polymethacrylates, polyvinyls, polyesters, polycarbonates, polyurethanes or a combination thereof.

The preparation of the polymer or polymers of the polymer composition was described in EP 1873202 B1 (CLARIANT FINANCE, UNIV BERN, OPTICAL ADDITIVES, 29 June 2006).

Especially preferred is a polymer made from diethylene glycol bis-allyl carbonate, hereinafter called CR-39. CR-39 can be obtained by polymerizing the liquid monomer diethylene glycol bis-allyl carbonate with 3 %-w/w to 6 %-w/w of di-benzoyl peroxide as an initiator. The two allyl groups allow a cross-linking polymerization giving a hard, insoluble and transparent material.

In a preferred embodiment of the second aspect of the invention, the zeolite-polymer hybrid material is in the form of a fibre.

A third aspect of the invention concerns a luminescent concentrator that comprises a zeolite-polymer hybrid material of the second aspect of the invention. It also comprises a bottom sheet and a top sheet on the zeolite-polymer hybrid material, wherein the bottom sheet and the top sheet are transparent sheets suitable for total internal reflection and consist of glass, plastic or a combination thereof. The luminescent concentrator optionally comprises a varnish and/or coating for application to the bottom sheet and/or the top sheet.

Preferably, the luminescent concentrator of the invention is a luminescent solar concentrator.

The structure and the working principle of the luminescent concentrators according to the invention, which can be produced with the zeolite-polymer hybrid material according to the invention, is described in EP 2291484 B1 (CALZAFERRI GION, KUNZMANN ANDREAS, UNIV ZUERICH, 31 March 2009).

The dye-loaded zeolite composite materials of the first aspect of the invention result in increased longevity of the luminescent concentrators.

A fourth aspect of the invention pertains to a luminescent concentrator for concentrating light to a point comprising a zeolite-polymer hybrid material of the second aspect of the invention or a luminescent concentrator of the third aspect of the invention. It also comprises at least one optical fibre luminescent concentrator optically coupled to at least one edge of the zeolite-polymer hybrid material or the luminescent concentrator.

In the context of the present invention, to objects can be optically coupled with each other when they are either in physical contact with each other or when there is a gap filled with a gas or a vacuum between the two devices.

In the context of the present invention, the phrase "concentrating light to a point" refers to the process of directing incident light rays so that they converge at a specific geometric location in space. This location, termed "the point," is defined as a region with dimensions not exceeding 5 mm, preferably not exceeding 2 mm, more preferably not exceeding 1 mm, most preferably not exceeding 0.5 mm in diameter. The term "a point" is thus not to be interpreted as an infinitesimally small geometric location but rather as a finite area.

An "optical fibre luminescent concentrator" comprises an optical fibre core infused with a luminescent material that absorbs incident light and re-emits it at a different wavelength. The emitted light is guided in one dimension through the fiber by internal reflection and concentrated at one or both ends, where it can be coupled to a photovoltaic cell for energy conversion, for example. The light can also be coupled into an optical fibre for a variety of applications. In the context of this invention, the luminescent material is preferably a dye-loaded zeolite composite material, as described in the first aspect of the invention. When the light source is a conventional LSC, the fibre is attached to the LSC by an optical contact (at the front, on the back or on at least one of the edges). The emission wavelength of the LSC should be equal to or short as the absorption wavelength of the optical fibre LSC.

A seventh aspect of the present invention concerns a photovoltaic device comprising a luminescent concentrator according to the fifth aspect of the invention, and a light energy converter optically coupled to the luminescent concentrator.

The luminescent concentrator comprises at least two different types of dye molecules, wherein the at least two different types of dye molecules shift the wavelength of the incident light of between 500 nm and 600 nm to a wavelength of more than 600 nm by a Förster resonance energy transfer cascade.

A light energy converter converts light energy into another form of energy, preferably electrical energy. Preferably, the light energy converter is a photovoltaic cell.

The light with a wavelength of more than 600 nm resulting from the process can either be converted into electrical energy by a photovoltaic cell, or it can be emitted as light energy to (a) photosynthesising plant(s).

A fifth aspect of the present invention concerns a process for preparing a dye-loaded composite material of the first aspect of the invention. The process comprises the steps of preparing a mixture that comprises a plurality of zeolite crystals comprising pores with a pore diameter. The plurality of zeolite crystals either comprises at least 100 moles SiO₂ per mole Al₂O₃, preferably at least 200 moles SiO₂ per mole Al₂O₃, more preferably at least 400 moles SiO₂ per mole Al₂O₃. Instead, the zeolite crystals are aluminophosphate zeolite crystals. The mixture also comprises a plurality of dye molecules, wherein the spatial extent of at least two dimensions perpendicular to each other of each dye molecule are smaller than the pore diameter. The mixture also comprises a solvent, wherein the solvent is or comprises a cyclic siloxane, a perfluorinated solvent, a sterically hindered aromatic solvent, a crown ether, a triglyceride, 9-ethyl-9-heptyloctadecane, 2,2,4,15,17,17-Hexamethyl-7,12-bis(3,5,5-trimethylhexyl)octadecane, 3-Heptadecanone, 5-decyl-5-heptyl-2,2-dimethyl, 3-Heptadecanol, 5-decyl-5-heptyl-2,2-dimethyl, 2,2,4,10,12,12-hexamethyl-7-(3,5,5-trimethylhexyl)tridecane, 8-Hexyl-8-pentylhexadecane, an ester, linoleic acid, stearic acid, elaidic acid or a combination thereof. The mixture is heated to at least 100 °C, preferably at least 120 °C, more preferably at least 140 °C to obtain the dye-loaded composite material.

Cyclic siloxanes suitable for the process according to the invention are described in EP 3434748 B1 (MERZ BENTELI AG, 26 July 2017). Additional preferred cyclic siloxanes are decamethylcyclopentasiloxane and octamethylcyclotetrasiloxane.

Preferably, the perfluorinated solvent is perfluorohexane, per-fluorodecalin, perfluorotributylamine or a combination thereof.

In a preferred embodiment of the fifth aspect of the invention, the process further comprises a step of removing water from the solvent before adding the solvent to the mixture to a maximum water content of 0.1 %-w/w, preferably 0.01 %-w/w, most preferably 0.001 %-w/w. Additionally or alternatively, the process further comprises a step of drying the plurality of zeolite crystals before adding the zeolite crystals to the mixture for at least 2 h, preferably at least 5 h, most preferably at least 8 h at a temperature of at least 110 °C, preferably at least 130 °C, most preferably at least 150 °C.

The water content of the solvent is quantitatively determined using coulometric Karl Fischer titration, in accordance with the ASTM E1064-16 (01 August 2023) standard.

A sixth aspect of the invention concerns the use of a dye-loaded composite material of the first aspect of the invention, a zeolite-polymer hybrid material of claims of the second aspect of the invention, or a luminescent concentrator of the third or fourth aspect of the invention in photovoltaic devices.

In a preferred embodiment of the sixth aspect of the invention, the photovoltaic devices are integrated in window panes, roofs of greenhouses, panels covering photosynthesising plants or any combination thereof.

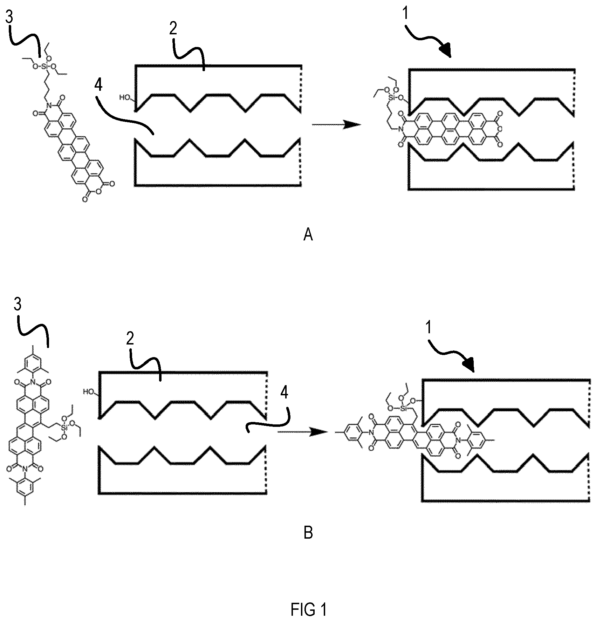

Figure 1A and 1B schematically show a preferred embodiment of the first aspect of the invention. A dye molecule (3) is immobilised at the opening of a pore (4) of a zeolite crystal (2) as part of a dye-loaded zeolite composite material (1).

## Claims

1. A dye-loaded zeolite composite material (1) comprising
- a plurality of zeolite crystals (2) comprising pores (4) with a pore diameter, and
- a plurality of dye molecules (3), in particular luminescent dye molecules (3), in the pores (4), wherein the spatial extent of at least two dimensions perpendicular to each other of each dye molecule (3) are smaller than the pore diameter;
**characterized in that**
- the plurality of zeolite crystals (2) comprises at least 5 moles SiO₂ per mole Al₂O₃, preferably at least 10 moles SiO₂ per mole Al₂O₃, more preferably at least 50 moles SiO₂ per mole Al₂O₃, even more preferably at least 100 moles SiO₂ per mole Al₂O₃, even more preferably at least 200 moles SiO₂ per mole Al₂O₃, most preferably at least 400 moles SiO₂ per mole Al₂O₃; or
- the zeolite crystals (2) are aluminophosphate zeolite crystals.

2. The dye-loaded zeolite composite material (1) of claim 1,
wherein the type of zeolite crystals (2) is zeolite L, zeolite Y, mordenite, ferrierite, pentasil, BETA, AlPO-5, AlPO-15, AlPO-36 or a combination thereof.

3. The dye-loaded zeolite composite material (1) of any of the preceding claims, wherein the pore diameter is at least 0.5 nm, preferably at least 0.7 nm, more preferably at least 0.9 nm.

4. The dye-loaded zeolite composite material (1) of any of the preceding claims, wherein the dye molecules (3) are chosen from the group consisting of perylene dyes, terylene dyes, cyanine dyes, oxazine dyes, BODIPY dyes, stilbene dyes, xanthene dyes, POPOP, dimethyl POPOP, biphenyls, terphenyls, quaterphenyls, tetracenes, triphendioxazines, acridines, stilbenes, azobenzenes, oxazolyl benzenes, styryl benzenes, fluorenone, isoviolanthrones, thioindigo compounds, and spiropyrans, naphthopyrans, carotenoids, caro-tenes, xanthenophylles, flavines, pyronines, oxazines, thi-onines, resorufine, methylviologen, carbocyanines, zethrene, rhodamine dyes, rhodamine 800, tetramethylrhodamine, BTA-TPA, ESi5a-ESi5d, tb-DXP, Amplite ADHP, Amplite IR, LysoBrite^{™} Red DND-99, Alexa Fluor dyes, KFL-1, KFL-3, KFL-11, KFL-12, KFL-13, TM-BDP, p-terphenyl, fluorescein, thodamine dyes, cyanine, dyes, pyrene dyes, Janelia dyes, SiR-Hoechst dyes, Phiton dyes, hostasol red, Oxonines, PDI dyes, dm-XP, Pigment Red 149, DMP, Pyronine, Resorufin (Res), Hydroxy-TEMPO, Biphenyl, DPH, MBOXE, 6-(((4-(4,4-difluoro-5-(2-thienyl)-4-bora-3a,4a-diaza-s-indacene-3-yl)phenoxy)acetyl)amino)hexanoic acid succinimidyl ester, 4,5-difluoro-5,7-diphenyl-4-bora-3a,4a-diaza-s-indacene-3-propionyl ethylenediamine hydrochloride, Pyronine G, Fluorenone and any combinations thereof.

5. The dye-loaded zeolite composite material (1) of any of the preceding claims, wherein more than 90 %, preferably more than 95 %, most preferably more than 99 % of the pore openings to the outer surfaces of the zeolite crystals (2) are each occupied by a dye molecule (3), wherein the dye molecule (3) is partially surrounded by the pore (4) and partially protrudes from the opening, and wherein the dye molecule (3) is linked to the outer surface via a chemical bond, preferably a silane-hydroxyl linkage.

6. A zeolite-polymer hybrid material comprising
- a transparent polymer or transparent polymer composition,
- a dye-loaded zeolite composite material (1) of any of the preceding claims embedded as one layer, or two layers spaced apart or more than two layers spaced apart into the transparent polymer or transparent polymer composition, and
- optionally, a varnish and/or coating for application to the transparent polymer or transparent polymer composition or glass.

7. The zeolite-polymer hybrid material of claim 6, wherein the transparent polymer or transparent polymer composition comprises of polyolefines, polysiloxanes, polyacrylates, polymethacrylates, polyvinyls, polyesters, polycarbonates, polyurethanes or a combination thereof.

8. The zeolite-polymer hybrid material of claims 6 to 7, wherein the zeolite-polymer hybrid material is in the form of a fibre.

9. A luminescent concentrator comprising
- a zeolite-polymer hybrid material of claims 6 to 8,
- a bottom sheet and a top sheet on the zeolite-polymer hybrid material, wherein the bottom sheet and the top sheet are transparent sheets suitable for total internal reflection and consist of glass, plastic or a combination thereof, and
- optionally, a varnish and/or coating for application to the bottom sheet and/or the top sheet.

10. A luminescent concentrator for concentrating light to a point comprising
- a zeolite-polymer hybrid material of claims 6 to 8, or a luminescent concentrator of claim 9,
- at least one optical fibre luminescent concentrator optically coupled to at least one edge of the zeolite-polymer hybrid material, or the luminescent concentrator.

11. A photovoltaic device comprising
- a luminescent concentrator according to claim 9 or 10, and
- a light energy converter optically coupled to the luminescent concentrator;
wherein the luminescent concentrator comprises at least two different types of dye molecules, wherein the at least two different types of dye molecules shift the wavelength of the incident light of between 500 nm and 600 nm to a wavelength of more than 600 nm by a Förster resonance energy transfer cascade.

12. A process for preparing a dye-loaded composite material (1) of any of claims 1 to 5, the process comprising the steps of
- preparing a mixture comprising
- a plurality of zeolite crystals comprising pores with a pore diameter, wherein
- the plurality of zeolite crystals comprises at least 100 moles SiO₂ per mole Al₂O₃, preferably at least 200 moles SiO₂ per mole Al₂O₃, more preferably at least 400 moles SiO₂ per mole Al₂O₃, or
- the zeolite crystals are aluminophosphate zeolite crystals;
- a plurality of dye molecules, in particular dye molecules, wherein the spatial extent of at least two dimensions perpendicular to each other of each dye molecule are smaller than the pore diameter, and
- a solvent, wherein the solvent is or comprises a cyclic siloxane, a perfluorinated solvent, a sterically hindered aromatic solvent, a crown ether, a triglyceride, 9-ethyl-9-heptyloctadecane, 2,2,4,15,17,17-Hexamethyl-7,12-bis(3,5,5-trimethylhexyl)octadecane, 3-Heptadecanone, 5-decyl-5-heptyl-2,2-dimethyl, 3-Heptadecanol, 5-decyl-5-heptyl-2,2-dimethyl, 2,2,4,10,12,12-hexamethyl-7-(3,5,5-trimethylhexyl)tridecane, 8-Hexyl-8-pentylhexadecane, an ester, linoleic acid, stearic acid, elaidic acid or a combination thereof; and
- heating the mixture to at least 100 °C, preferably at least 120 °C, more preferably at least 140 °C to obtain the dye-loaded composite material.

13. The process of claim 12, wherein the process further comprises
- a step of removing water from the solvent before adding the solvent to the mixture to a maximum water content of 0.1 %-w/w, preferably 0.01 %-w/w, most preferably 0.001 %-w/w, and/or
- a step of drying the plurality of zeolite crystals before adding the zeolite crystals to the mixture for at least 2 h, preferably at least 5 h, most preferably at least 8 h at a temperature of at least 110 °C, preferably at least 130 °C, most preferably at least 150 °C.

14. Use of a dye-loaded composite material of any of claims 1 to 5, a zeolite-polymer hybrid material of claims 6 to 8, a luminescent concentrator of claims 9 to 10, or a photovoltaic device of claim 11 in photovoltaic devices.

15. Use according to claim 14, wherein the photovoltaic devices are integrated in window panes, roofs of greenhouses, panels covering photosynthesising plants or any combination thereof.
